**Europäisches Patentamt**

**European Patent Office**

**Office européen des brevets** ·

(19)

(11) Veröffentlichungsnummer: **0 242 692 B1**

(12) # EUROPÄISCHE PATENTSCHRIFT

(45) Veröffentlichungstag der Patentschrift:
27.12.90

(51) Int. Cl.⁵: **G01F 1/075**, G01F 15/14

(21) Anmeldenummer: 87105101.7

(22) Anmeldetag: 07.04.87

(54) **Flüssigkeitszähler.**

(30) Priorität: 21.04.86 DE 8611134 U

(43) Veröffentlichungstag der Anmeldung:
28.10.87 Patentblatt 87/44

(45) Bekanntmachung des Hinweises auf die Patenterteilung:
27.12.90 Patentblatt 90/52

(84) Benannte Vertragsstaaten:
AT BE CH DE ES FR GB GR IT LI LU NL SE

(56) Entgegenhaltungen:
EP-A- 0 088 883
DE-U- 8 236 017

O.A.Neumüller "Römpps Chemielexikon", 7.Auflage, 1973 FRANCKH'SCHE VERLAGSHANDLUNG, Stuttgart, Seiten 444, 2549

(73) Patentinhaber: ConGermania Mess- und Regelgeräte GmbH, Am Vossberg 11, D-2440 Oldenburg i.H.(DE)

(72) Erfinder: **Körner, Holger, Platanenallee 39, D-2440 Oldenburg I. H.(DE)**

(74) Vertreter: **UEXKÜLL & STOLBERG Patentanwälte, Beselerstrasse 4, D-2000 Hamburg 52(DE)**

## Beschreibung

Die Erfindung betrifft einen Durchflußzähler gemäß Oberbegriff des Patentanspruchs 1.

Aus der DE-Gebrauchsmusterschrift 8 236 017 ist bereits ein Wasserzähler bekannt, bei dem die Druckplatte eine Federplatte ist, welche auf dem Umfang einer Staurippenplatte aufliegt und von einer Tellerfeder in Richtung Flügelrad gedrückt wird, um das Lagerspiel der Flügelradachse zu definieren und die Drehverstellbarkeit der Druckplatte zur Justierung des Zählers herzustellen. Die Tellerfeder wird von einem Sprengring im Gehäuse festgesetzt, indem der Sprengring in eine Umfangsnut des Gehäuses eingesetzt ist. Die Druckplatte ist ihrerseits gegenüber dem Gehäuse über eine Ringdichtung abgedichtet. Da sie eine Federplatte ist, kann sie Druckstöße aufnehmen, die entweder in der durch den Wasserzähler geförderten Flüssigkeit auftreten oder durch Einfrieren des Wassers hervorgerufen werden. Mit dem Sprengring läßt sich ein axiales Positionieren der Druckplatte jedoch nicht erreichen.

Aus dem DE-U1 8 221 506 bzw EP-A 0 088 883 ist es unter Ausbildung eines Durchflußzählers der eingangs erwähnten Art bekannt, statt der federnden Druckplatte, der Tellerfeder und des Sprengringes eine starre Druckplatte und einen schraubverstellbaren Kopfring zur Lagesicherung der Druckplatte zu verwenden. Die Druckplatte ist zum Justieren des Zählers drehverstellbar. Zum Justieren wird der Kopfring etwas gelöst, damit sich die Druckplatte drehen läßt. Dadurch ändert sich jedoch auch das axiale Lagerspiel des Flügelrades. Außerdem wird die Druckplatte bei dem Justieren des Zählers durch Drehen der Druckplatte unter dem Innendruck des Prüfmediums (ca. 4 bar) gegen den Kopfring gepreßt, wodurch ein hoher Reibwert entsteht und sich der Kopfring beim Justiervorgang mitdrehen und wegen seiner Schraubverstellbarkeit axial verlagern kann. Hierdurch werden auch die axiale Lage der Druckplatte und damit auch das axiale Lagerspiel für das Flügelrad undefiniert entweder positiv oder negativ verändert.

Es ist Aufgabe der Erfindung, den Durchflußzähler der eingangs genannten Art dahingehend zu verbessern, daß das axiale Lagerspiel des Flügelrades auch nach dem Justieren des Zählers definiert eingestellt bleibt.

Zur Lösung dieser Aufgabe dient ein Durchflußzähler für unter Druck stehende Flüssigkeiten mit einem Anschlüsse (1', 1") für Rohrleitungen aufweisenden Gehäuse (1), in dem ein Flügelrad (7) sowie ein Zählwerk (3) untergebracht sind, zwischen denen eine abdichtende Trennwand in Form einer zum Justieren des Zählers drehverstellbaren Druckplatte (11) liegt, auf der sich das Zählwerk (3) abstützt und durch die hindurch die Flügelradachse (6) und die Welle (19) des Zählwerks (3) miteinander magnetisch gekoppelt sind, und mit einem mit Außengewinde (16) in das Gehäuse (1) einschraubbaren Kopfring (14) als Anschlag für die Druckplatte (11), dadurch gekennzeichnet, daß der das axiale Lagerspiel des Flügelrades (7) bestimmende Kopfring (14) durch einen in eine Umfangsnut (13) eingelegten O-Ring (15) gegenüber dem Gehäuse (1) gegen ein Verdrehen durch das Drehverstellen der Druckplatte (11) gesichert ist.

Dadurch kann mittels des Kopfringes die Druckplatte zur Festlegung des axialen Lagerspiels des Flügelrades in reproduzierbarer Weise gegenüber dem Gehäuse des Durchflußzählers eingestellt werden. Hierbei wird der Kopfring nach seinem Festziehen durch Drehung um einen bestimmten Winkel wieder gelöst, so daß ein Axialspiel der Druckplatte von ca. 0,05 mm erreicht wird und so eine Drehung der Druckplatte und damit eine Justierung des Zählers möglich sind. Mit dem O-Ring wird der Kopfring während des Verdrehens der Druckplatte, obwohl dabei aufgrund des Anliegens der Druckplatte am Kopfring ein Reibmoment auf diesen einwirkt, am Gehäuse festgehalten, so daß das eingestellte Axialspiel der Druckplatte und daher des Flügelrades bei dem Verdrehen der Druckplatte unverändert bleibt.

Der O-Ring ist mehrfach verwendbar; sollte er verschlissen sein, so kann er ohne Schwierigkeiten gegen einen neuen O-Ring ausgetauscht werden.

Vorzugsweise besteht der O-Ring aus Perbunan® oder Buna N® und hat eine Shore-Härte von etwa 70, was für den erfindungsgemäßen Verwendungszweck des O-Rings unter den vorliegenden Anwendungsbedingungen günstig ist.

Die Erfindung wird im folgenden anhand eines Ausführungsbeispiels näher erläutert, welches einen Durchflußzähler für unter Druck stehende Flüssigkeiten schematisch im Schnitt zeigt:

Der dargestellte Durchflußzähler hat ein T-förmiges Gehäuse, an dessen Anschluß 1' die Flüssigkeit zugeführt wird, die aus dem Anschluß 1" abfließt. Zwischen den Anschlüssen 1' und 1" ist das Gehäuse 1 mit einer oben offenen Mittelöffnung versehen, in die ein Flügelrad 7 in an sich bekannter Weise eingesetzt ist. Das Flügelrad 7 wird von einer Flügelradachse 6 getragen, die sich mit einem Ende am Boden des Gehäuses 1 abstützt und mit ihrem anderen Ende in einer Druckplatte 11 gelagert ist.

Die Druckplatte 11 liegt auf einer Ringschulter 12 des Gehäuses 1 und ist gegenüber dem Gehäuse 1 durch eine Ringdichtung 10 abgedichtet. Die Druckplatte 11 besteht üblicherweise aus Messing, sie kann aber auch aus Kunststoff bestehen. Sie wird von einem Kopfring 14, der ebenfalls vorzugsweise aus Messing besteht, in ihrer Lage fixiert. Zu diesem Zweck ist der Kopfring 14 mit einem Außengewinde 16 versehen und in ein entsprechendes Innengewinde der Innenwand des Gehäuses geschraubt. In das Außengewinde 16 ist eine Umfangsnut 13 eingestochen, in die ein O-Ring 15 eingelegt ist. Der O-Ring 15 besteht in einer Ausführungsform aus Perbunan® oder Buna N® und hat eine Shore-Härte von etwa 70. Dadurch wird der Kopfring 14 im Gehäuse gesichert, indem der O-Ring 15 ein Verdrehen des Kopfringes 14 gegenüber dem Gehäuse 1 beim Verdrehen der Druckplatte 11 zum Justieren des Zählers unterbindet. Dadurch läßt sich der Zähler genau justieren.

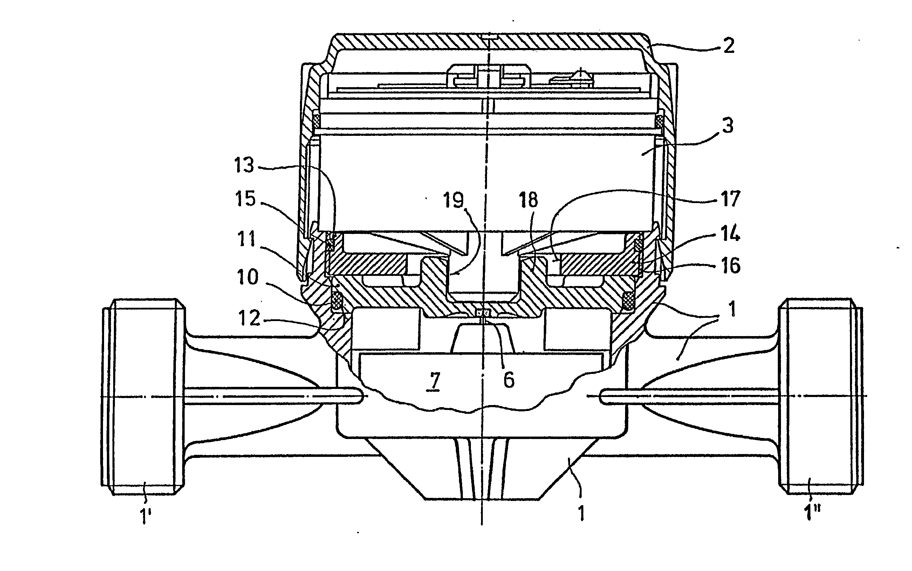

Der Kopfring 14 besitzt eine Mittelöffnung 17, in die sich ein Teil eines becherförmigen Mittelstücks 18 der Druckplatte 11 erstreckt. In dem becherförmigen Mittelstück 18 der Druckplatte 11 ist die Welle 19 des Zählwerks 3 gelagert, die durch Magnetkräfte bei einer Drehung des Flügelrades 7 von dessen Achse 6 in an sich bekannter Weise ebenfalls in Drehung versetzt wird. Zu diesem Zweck sind an den einander zugewandten Enden der Flügelradachse 6 und der Welle 19 des Zählwerks 3 nicht dargestellte Magnete vorgesehen. Eine Abdeckung 2 überdeckt das Zählwerk 3 und ist mit dem Gehäuse 1 verriegelt, zweckmäßigerweise verschraubt oder verklemmt. Die Abdeckung 2 ist zumindest im Bereich ihrer in der Figur oberen Fläche durchsichtig.

## Patentansprüche

1. Durchflußzähler für unter Druck stehende Flüssigkeiten mit einem Anschlüsse (1', 1") für Rohrleitungen aufweisenden Gehäuse (1), in dem ein Flügelrad (7) sowie ein Zählwerk (3) untergebracht sind, zwischen denen eine abdichtende Trennwand in Form einer zum Justieren des Zählers drehverstellbaren Druckplatte (11) liegt, auf der sich das Zählwerk (3) abstützt und durch die hindurch die Flügelradachse (6) und die Welle (19) des Zählwerks (3) miteinander magnetisch gekoppelt sind, und mit einem mit Außengewinde (16) in das Gehäuse (1) einschraubbaren Kopfring (14) als Anschlag für die Druckplatte (11), dadurch gekennzeichnet, daß der das axiale Lagerspiel des Flügelrades (7) bestimmende Kopfring (14) durch einen in eine Umfangsnut (13) eingelegten O-Ring (15) gegenüber dem Gehäuse (1) gegen ein Verdrehen durch das Drehverstellen der Druckplatte (11) gesichert ist.

2. Flüssigkeitszähler nach Anspruch 1, dadurch gekennzeichnet, daß der O-Ring (15) eine Shore-Härte von 70 hat.

## Claims

1. A flowmeter for pressurised fluids having a housing (1) comprising connections (1', 1") for pipelines, in which a propeller (7) and a meter (3) are housed, between which there is a sealing partition in the form of a rotationally adjustable pressure plate (11) for adjusting the meter, on which the meter (3) is supported and through which the propeller axle (6) and the shaft (19) of the meter (3) are magnetically connected to one another, and having a head ring (14) which can be screwed with an external thread (16) into the housing (1) as a stop for the pressure plate, characterised in that the head ring (14) determining the axial bearing play of the propeller (7) is prevented from rotating as a result of the rotational adjustment of the pressure plate (11) with respect to the housing (1) by an O ring (15) inserted in a peripheral groove (13).

2. A flowmeter according to claim 1, characterised in that the O ring (15) has a Shore hardness of 70.

## Revendications

1. Débitmètre pour des liquides sous pression, ce compteur comportant un boîtier (1) présentant des raccords (1, 1") pour des conduits, boîtier dans lequel sont montés une roue (7) à ailettes, ainsi qu'un mécanisme (3) de comptage, entre lesquels se trouve une cloison d'étanchement ayant la forme d'une plaque (11) d'appui, dont la position peut être ajustée en hauteur pour régler le compteur et sur laquelle le mécanisme (3) de comptage s'appuie, plaque par l'intermédiaire de laquelle l'axe (6) de la roue à ailettes et l'arbre (19) du mécanisme (3) de comptage sont magnétiquement accouplés l'un à l'autre, le compteur comportant également une bague (14) de tête, présentant un filetage (16) extérieur permettant de visser cette bague dans le boîtier (1) pour servir de butée à la plaque (11) d'appui, compteur caractérisé en ce que la bague (14) de tête, déterminant le jeu axial de la portée de la roue (7) à ailettes, est garantie, par une bague torique (15) encastrée dans une gorge (13) périphérique, contre une rotation, par rapport au boîtier (1), que l'ajustement par rotation de la plaque (1) d'appui pourrait imprimer à la bague (14).

2. Débitmètre selon la revendication 1, caractérisé en ce que la bague torique (15) a une dureté Shore de 70.